Europäisches Patentamt

European Patent Office

Office européen des brevets

(19)

(11) EP 0 605 273 B1

(12) **FASCICULE DE BREVET EUROPEEN**

(45) Date de publication et mention
de la délivrance du brevet:
**19.06.1996 Bulletin 1996/25**

(51) Int Cl.6: **C23C 30/00**, C23C 4/04

(21) Numéro de dépôt: **93403009.9**

(22) Date de dépôt: **13.12.1993**

(54) **Barrières thermiques, materiau et procédé pour leur élaboration**

Wärmeschutzschichten, Materialien und Verfahren zu ihrer Herstellung

Thermal barriers, materials and process for their preparation

(84) Etats contractants désignés:
**AT BE CH DE DK ES FR GB GR IT LI LU NL SE**

(30) Priorité: **23.12.1992 FR 9215659**

(43) Date de publication de la demande:
**06.07.1994 Bulletin 1994/27**

(73) Titulaire: **SOCIETE NOUVELLE DE
METALLISATION INDUSTRIES (Société
Anonyme)
F-84000 Avignon (FR)**

(72) Inventeurs:
 • **Dubois, Jean-Marie
 F-54340 Pompey (FR)**

 • **Cathonnet, Philippe
 F-84000 Avignon (FR)**

(74) Mandataire: **Sueur, Yvette et al
Cabinet SUEUR & L'HELGOUALCH,
78, Rue Carnot
F-95240 Cormeilles-en-Parisis (FR)**

(56) Documents cités:
**EP-A- 0 086 330          EP-A- 0 504 048
WO-A-92/13111**

 • **PATENT ABSTRACTS OF JAPAN vol. 13, no. 472
(C-647)(3820) 25 Octobre 1989 & JP-A-11 084 261
(TOYOTA) 21 Juillet 1989**
 • **PATENT ABSTRACTS OF JAPAN vol. 13, no. 472
(C-647)(3820) 25 Octobre 1989 & JP-A-11 084 261**

## Description

La présente invention concerne des barrières thermiques, un procédé et un matériau pour leur élaboration, et leurs applications.

Les barrières thermiques sont des constituants essentiels de nombreux ensembles mécaniques qui supportent des écarts de température importants : turbo-compresseurs, moteurs à explosion, réacteurs chimiques, etc... Elles sont alors destinées à prévenir l'échauffement excessif de certains composants, en général métalliques, qui sans elles verraient leur température de surface dépasser une limite acceptable, entraînant la fusion superficielle ou encore une dégradation de leurs propriétés.

Les barrières thermiques sont généralement constituées par un oxyde ou un mélange d'oxydes de très faible conductivité thermique et elles sont élaborées par dépôt de l'oxyde ou du mélange d'oxydes par voie chimique ou physique (pulvérisation cathodique ou torche à plasma par exemple) sur le substrat à protéger. L'oxyde le plus fréquemment utilisé est la zircone stabilisée par l'oxyde d'yttrium, qui résiste à des températures très élevées. Le dépôt de zircone est réalisé par projection plasma selon une technique classique à partir de poudre du matériau. La zircone présente une faible diffusivité thermique ($\alpha = 10^{-6}$ m$^2$/s). Toutefois, elle présente une masse spécifique p relativement élevée, ce qui constitue un inconvénient pour certaines applications ; en outre, certaines de ses propriétés mécaniques, telles que la dureté, la résistance à l'usure et à l'abrasion sont faibles. Un autre oxyde utilisable comme barrière thermique est l'alumine, stabilisée par un autre oxyde tel que l'oxyde de titane $TiO_2$ par exemple. L'alumine présente une masse spécifique inférieure à celle de la zircone, une diffusivité et une chaleur spécifique supérieures à celles de la zircone, mais ses propriétés mécaniques ne sont pas satisfaisantes.

On connaît également l'utilisation d'aciers inoxydables et de certains aciers réfractaires pour constituer des barrières thermiques. Ils offrent des propriétés d'isolation thermique, mais présentent une masse spécifique élevée.

Dans la plupart des dispositifs équipés de barrières thermiques, l'évolution cyclique de la température constitue le facteur déterminant en ce qui concerne la durée de vie et la fiabilité de la barrière. En effet, celle-ci subit des variations de température de grande amplitude (de la température de repos à la température nominale de fonctionnement) et de grande périodicité (plusieurs heures par exemple) mais qui peuvent s'installer en des temps très brefs, comme par exemple lors de l'allumage d'un moteur à explosion. A ces variations brutales se superpose généralement une modulation de température de plus faible amplitude mais à cycle très rapide, comme par exemple dans un moteur automobile où le cycle explosion/échappement s'effectue avec une période de l'ordre de quelques dizaines de Hertz.

Il en résulte alors une fatigue très importante de la barrière thermique en raison des contraintes mécaniques cycliques engendrées par la différence de dilatation thermique du support de la barrière d'une part et du matériau constituant la barrière d'autre part. L'endommagement affecte très généralement la barrière thermique plutôt que le support métallique sous-jacent puisque l'écart de coefficient de dilatation est de nature à engendrer des contraintes de traction dans la barrière, essentiellement lorsqu'elle est constituée par un oxyde. Les détériorations se concentrent dans la barrière, à proximité de l'interface substrat/barrière où les contraintes de cisaillement sont maximales. Des fissures parallèles à l'interface s'installent alors et provoquent l'arrachement de la barrière. La disparition de son rôle protecteur peut avoir un effet catastrophique, par exemple s'il est la cause de la fusion du métal sous-jacent. Pour limiter ou supprimer ces inconvénients, il a alors été proposé d'interposer entre le support métallique et la barrière thermique, une couche d'accrochage constituée par un matériau métallique. Le choix d'un matériau métallique présentant un coefficient de dilatation intermédiaire entre celui du substrat et celui du matériau constituant la barrière thermique permet de réduire le gradient de température à l'interface. Le choix d'un alliage métallique qui devient plastique dans la zone de température où les contraintes interfaciales sont préjudiciables à la tenue de la barrière thermique permet pratiquement de faire disparaître les effets du gradient de température à l'interface. Le matériau le plus classiquement utilisé dans l'industrie appartient à la classe des alliages MCrAlY où M représente un métal comme le nickel.

La nécessité d'associer une couche d'accrochage à la couche de matériau formant la barrière thermique proprement dite présente toutefois un inconvénient dans la mesure où les dimensions de la pièce finie soumise à des chocs thermiques ne peuvent pas dépasser certaines limites supérieures. L'adjonction d'une couche d'accrochage entraîne alors une diminution des cotes du substrat, ce qui peut nuire aux autres propriétés de la pièce.

Plus récemment, on a proposé comme élément de protection thermique, une nouvelle catégorie d'alliages, les alliages d'aluminium quasicristallins dont la diffusivité thermique est voisine, voire inférieure à celle de la zircone, et qui deviennent superplastiques dès 650°C, certains d'entre eux conservant cette superplasticité jusque vers 1200°C.

Un alliage quasicristallin est un alliage comprenant une ou plusieurs phases quasicristallines qui sont soit des phases quasicristallines au sens strict, soit des phases approximantes. (EP-A-521138, Dubois et al). Les phases quasicristallines au sens strict sont des phases présentant des symétries de rotation normalement incompatibles avec la symétrie de translation, c'est-à-dire des symétries d'axe de rotation d'ordre 5, 8, 10 et 12, ces symétries étant révélées par la diffraction du rayonnement. A titre d'exemple, on peut citer la phase icosaédrique de groupe ponctuel $m\bar{3}\,\bar{5}$ et la phase décagonale de groupe ponctuel 10/mmm.

Les phases approximantes ou composés approximants sont des cristaux vrais dans la mesure où leur structure cristallographique reste compatible avec la symétrie de translation, mais qui présentent, dans le cliché de diffraction d'électrons, des figures de diffraction dont la symétrie est proche des axes de rotation 5, 8, 10 ou 12.

Parmi ces phases, on peut citer à titre d'exemple la phase orthorhombique $O_1$, caractéristique d'un alliage ayant la composition position atomique $Al_{65}Cu_{20}Fe_{10}Cr_5$, dont les paramètres de maille exprimés en nm sont : $a_o^{(1)} = 2,366$, $b_o^{(1)} = 1,267$, $c_o^{(1)} = 3,252$. Cette phase orthorhombique $O_1$ est dite approximante de la phase décagonale. Elle en est d'ailleurs si proche qu'il n'est pas possible de distinguer son diagramme de diffraction des rayons X de celui de la phase décagonale.

On peut également citer la phase rhomboédrique de paramètres $a_R = 3,208$ nm, $\alpha = 36°$, présente dans les alliages de composition voisine de $Al_{64}Cu_{24}Fe_{12}$ en nombre d'atomes. Cette phase est une phase approximante de la phase icosaédrique.

On peut aussi citer des phases $O_2$ et $O_3$ orthorhombiques de paramètres respectifs $a_o^{(2)} = 3,83$ ; $b_o^{(2)} = 0,41$ ; $c_o^{(2)} = 5,26$ et $a_o^{(3)} = 3,25$ ; $b_o^{(3)} = 0,41$ ; $c_o^{(3)} = 9,8$ en nanomètres, présentes dans un alliage de composition $Al_{63}Cu_{17,5}Co_{17,5}Si_2$ en nombre d'atomes ou encore la phase orthorhombique $O_4$ de paramètres $a_o^{(4)} = 1,46$ ; $b_o^{(4)} = 1,23$ ; $c_o^{(4)} = 1,24$ en nanomètres, qui se forme dans l'alliage de composition $Al_{63}Cu_8Fe_{12}Cr_{12}$ en nombre d'atomes.

On peut encore citer une phase C, de structure cubique, très souvent observée en coexistence avec les phases approximantes ou quasicristallines vraies. Cette phase qui se forme dans certains alliages Al-Cu-Fe et Al-Cu-Fe-Cr, consiste en une surstructure, par effet d'ordre chimique des éléments d'alliage par rapport aux sites d'aluminium, d'une phase de structure type Cs-Cl et de paramètre de réseau $a_1 = 0,297$ nm.

Un diagramme de diffraction de cette phase cubique a été publié pour un échantillon de phase cubique pure et de composition $Al_{65}Cu_{20}Fe_{15}$ en nombre d'atomes.

On peut aussi citer une phase H de structure hexagonale qui dérive directement de la phase C comme le démontrent les relations d'épitaxie observées par microscopie électronique entre cristaux des phases C et H et les relations simples qui relient les paramètres des réseaux cristallins, à savoir $a_H = 3\sqrt{2}a_1/\sqrt{3}$ (à 4,5% près) et $C_H = 3\sqrt{3}a_1/2$ (à 2,5% près) . Cette phase est isotype d'une phase hexagonale, notée $\Phi AlMn$, découverte dans des alliages Al-Mn contenant 40% en poids de Mn.

La phase cubique, ses surstructures et les phases qui en dérivent, constituent une classe de phases approximantes des phases quasicristallines de compositions voisines.

Tous ces alliages quasicristallins peuvent être utilisés comme barrière thermique. De plus, grâce à leurs propriétés de superplasticité, pour certains jusque vers 1200°C, ils peuvent en outre être utilisés comme couche d'accrochage pour des barrières thermiques conventionnelles constituées par des oxydes. Toutefois la température de fusion de ces alliages est inférieure aux températures atteintes par certaines pièces à protéger lors des cycles thermiques. La barrière est alors détruite. Ces matériaux ne conviennent par conséquent pour constituer des barrières thermiques que pour certaines utilisations.

La présente invention a pour but de remédier à cet inconvénient en proposant une barrière thermique assurant une protection thermique au moins aussi bonne que celle des matériaux utilisés dans l'art antérieur pour les barrières thermiques, et utilisables même à des températures élevées.

C'est pourquoi la présente invention a pour objet des barrières thermiques.

L'invention a également pour objet un procédé d'élaboration desdites barrières thermiques.

L'invention a en outre pour objet un matériau pour l'élaboration desdites barrières thermiques.

Enfin, l'invention a pour objet différentes applications des barrières thermiques.

Une barrière thermique selon la présente invention est caractérisée en ce qu'elle est constituée par un matériau comprenant au moins un oxyde réfractaire ayant une faible diffusivité thermique et au moins un alliage d'aluminium quasicristallin, la proportion d'alliage quasicristallin représentant d'environ 2 à environ 30% en volume.

De préférence, l'oxyde réfractaire a une diffusivité thermique inférieure à 5 mm$^2$/s, plus particulièrement inférieure à 2 mm$^2$/s. La zircone et l'alumine sont des oxydes réfractaires particulièrement préférés pour le matériau constituant les barrières thermiques de la présente invention. La zircone peut être utilisée seule ou en mélange avec un oxyde stabilisant tel que MgO, CaO ou $Y_2O_3$. De préférence, elle est utilisée seule, ou en mélange avec une quantité d'oxyde stabilisant inférieure ou égale à 3% en poids. L'alumine est stabilisée par addition de $TiO_2$.

L'alliage quasicristallin utilisé pour le matériau de la présente invention est un alliage d'aluminium comprenant au moins 80% en volume d'une ou plusieurs phases quasicristallines, qu'il s'agisse de phases quasicristallines au sens strict ou de phases approximantes, telles que définies précédemment. La proportion d'alliage quasicristallin dans le matériau constituant les barrières thermiques de l'invention est, de préférence, comprise entre environ 5 et environ 20% en volume.

L'alliage quasicristallin est avantageusement choisi parmi ceux qui présentent l'une des compositions nominales suivantes, dans lesquelles les proportions sont données en nombres d'atomes :

- $Al_aCu_bFe_cY_eI_g$, (I) dans laquelle Y représente au moins un élément choisi parmi V, Mo, Ti, Zr, Nb, Cr, Mn, Ru, Rh, Ni, Mg, W, Si et les terres rares, I représente les impuretés d'élaboration inévitables, $0 \leq g \leq 2$, $14 \leq b \leq 30$, $7 \leq c \leq 20$ ,

$0 \leq e \leq 10$, $c+e \geq 10$ et $a+b+c+e+g=100\%$ en nombre d'atomes ;

- $Al_aCu_bFe_cX_dY_eI_g$, (II) dans laquelle X représente au moins un élément choisi parmi B, C, P, S, Ge et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0 \leq g \leq 2$, $14 \leq b \leq 30$, $7 \leq c \leq 20$, $0 \leq d \leq 5$, $21 \leq b+c+e \leq 45$, et $a+b+c+d+e+g=100\%$ en nombre d'atomes ;

- $Al_aPd_bMn_cX_dY_eT_fI_g$ (III) dans laquelle X représente au moins un métalloïde choisi parmi B, C, Si, Ge, P, et S ; Y représente au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100\%$ atomique ; $15 \leq b \leq 25$ ; $6 \leq c \leq 16$ ; $21 \leq b+c+e \leq 45$ ; $0 \leq f \leq 4$; $0 \leq g \leq 2$ ; $0 \leq d \leq 5$ ;

- $Al_aCu_bCo_cX_dY_eT_fI_g$ (IV) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables ; avec $a+b+c+d+e+f+g=100\%$ atomique ; $14 \leq b \leq 27$ ; $8 \leq c \leq 24$ ; $28 \leq b+c+e \leq 45$ ; $0 \leq f \leq 4$ ; $0 \leq d \leq 5$ ; $0 \leq g \leq 2$ ;

- $Al_aX_dY_eI_g$, (V) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0 \leq g \leq 2$; $0 \leq d \leq 5$ ; $18 \leq e \leq 29$ et $a+d+e+g=100\%$ en nombre d'atomes ;

- $Al_aCu_bCo_{b'}(B,C)_cM_dN_eI_f$ (VI) dans laquelle M représente au moins un élément choisi parmi Fe, Cr, Mn, Ni, Ru, Os, Mo, V, Mg, Zn et Pd, N représente au moins un élément choisi parmi W, Ti, Zr, Hf, Rh, Nb, Ta, Y, Si, Ge et les terres rares, et $a \geq 50$, $0 \leq b \leq 14$, $0 \leq b' \leq 22$, $0 \leq b+b' \leq 30$, $0 \leq c \leq 5$, $8 \leq d \leq 30$, et $c+d \geq 10$.

Les barrières thermiques peuvent être élaborées par différents procédés.

Selon un premier procédé, on élabore une barrière thermique de la présente invention en effectuant un dépôt d'un mélange d'oxyde réfractaire et d'alliage quasicristallin en phase vapeur. Le mélange en phase vapeur peut être obtenu par pulvérisation cathodique. Cette opération peut être effectuée soit à partir de deux cibles distinctes, l'une constituée par l'oxyde réfractaire, l'autre constituée par l'alliage quasicristallin, soit à partir d'une cible unique obtenue à partir d'un matériau constitué par un mélange d'oxyde réfractaire et d'alliage d'aluminium quasicristallin, avec les proportions appropriées.

Selon un autre procédé, on effectue le dépôt sur le support à protéger à partir d'un mélange d'oxyde réfractaire et d'alliage d'aluminium quasicristallin à l'état fondu, ledit mélange à l'état fondu étant obtenu par fusion d'une poudre à l'aide d'un dispositif adapté, et projeté sur la surface du substrat. Un moyen particulièrement avantageux pour mettre en oeuvre cette technique est une torche à plasma qui permet de fondre aisément l'oxyde réfractaire, plus particulièrement la zircone. Il est particulièrement avantageux d'utiliser une poudre constituée par un mélange de poudre d'oxyde réfractaire et de poudre d'alliage d'aluminium quasicristallin, avec les proportions appropriées. Il est également possible d'injecter séparément dans le plasma l'oxyde réfractaire et l'alliage quasicristallin. Dans ce cas, la méthode employée pour l'injection et la proportion relative des matériaux permettent de contrôler le degré d'homogénéité de la barrière.

Selon un troisième procédé, on effectue le dépôt sur le support à protéger à l'aide d'un chalumeau oxygène-gaz alimenté en matériau par un cordon souple qui contient un oxyde réfractaire et un ou plusieurs alliages quasicristallins tels que définis ci-dessus, la proportion d'alliage quasicristallin étant au plus égale à 30% en volume. Le cordon est réalisé suivant une technique décrite par exemple dans FR 2.673.871 à partir d'oxyde réfractaire tel que défini ci-dessus et d'un ou plusieurs alliages quasicristallins tels que définis ci-dessus, les constituants étant préalablement réduits en poudre, par exemple par broyage, de sorte que la granulométrie de l'oxyde réfractaire soit aussi fine que possible et celle de l'alliage quasicristallin soit de préférence de l'ordre de 10 à 40µm. Des adjuvants organiques ainsi qu'une gaine organique sont utilisés pour conférer une bonne tenue mécanique au cordon. Lorsque l'extrémité du cordon est introduite dans la flamme du chalumeau, la fusion des grains de quasicristal assure un enrobage des grains d'oxyde qui ensuite réalisera la cohésion de la barrière ainsi que sa résistance aux chocs thermiques. Une fraction volumique de quasicristal comprise entre 15 et 20% en volume est particulièrement préférée pour le cordon.

Les techniques ci-dessus peuvent être mises en oeuvre avantageusement à partir d'un matériau constitué par un mélange de poudre d'au moins un oxyde réfractaire ayant une diffusivité inférieure à 5 mm$^2$/s, de préférence inférieure à 2 mm$^2$/s, et de poudre d'au moins un alliage d'aluminium quasicristallin tel que défini précédemment, matériau dans lequel la proportion volumique d'alliage quasicristallin est d'environ 2 à environ 30% en volume, et les poudres ont une granulométrie qui permet une bonne coulabilité du mélange et une distribution des diamètres de grains comprise entre 10 et 45 µm.

Un matériau particulièrement avantageux pour l'élaboration de barrières thermiques est une poudre telle que définie ci-dessus dans laquelle l'oxyde réfractaire est la zircone pure ou une zircone stabilisée à faible teneur en oxyde stabilisant. La teneur en oxyde stabilisant, choisi parmi CaO, MgO ou $Y_2O_3$, est avantageusement inférieure ou égale à 3% en poids.

L'utilisation de ces matériaux pulvérulents particuliers pour l'élaboration de barrières thermiques selon l'invention est particulièrement souhaitable lorsque le dépôt sur le substrat est effectué à l'aide d'une torche à plasma.

Les barrières thermiques de la présente invention sont constituées par un matériau homogène vis-à-vis de la conduction de la chaleur puisque les conductivités thermiques de leurs constituants (oxyde et alliage quasicristallin) sont équivalentes. En revanche, ils sont hétérogènes pour ce qui concerne les propriétés mécaniques à haute température puisque l'alliage quasicristallin devient superplastique, voire liquide aux températures très élevées, alors que l'oxyde reste un matériau solide, mais fragile. L'oxyde assure ainsi la tenue mécanique de la barrière thermique. L'alliage quasicristallin en devenant superplastique ou liquide, absorbe les contraintes générées à l'interface barrière/substrat et aux joints de grains de l'oxyde aux températures élevées lors des chocs thermiques, et ce d'autant mieux que le mélange est physiquement homogène à plus fine échelle. Ces propriétés permettent de réduire de façon substantielle l'épaisseur de la couche d'accrochage, et même de supprimer cette couche, utilisée pour les barrières conventionnelles constituées uniquement par un oxyde.

Les barrières thermiques de la présente invention sont particulièrement utiles pour la protection de pièces de moteurs d'avions, de pièces aéronautiques ou aérospatiales, de pièces de moteurs pour automobiles, de réacteurs chimiques, ou d'accessoires électroménagers.

La présente invention sera illustrée plus en détails par les exemples non limitatifs suivants.

EXEMPLE 1

Préparation d'un alliage quasicristallin

Un alliage quasicristallin ayant la composition atomique $Al_{68}Cu_{10}Fe_{11}Cr_{11}$ a été élaboré de manière conventionnelle sous forme de poudre par atomisation au jet d'argon de l'alliage liquide ayant la même composition. La poudre obtenue présente une distribution de la dimension des grains centrée sur 35 à 40 μm. La diffusivité thermique $\alpha$ de l'alliage est de $0,7.10^{-6}$ m²/s à la température ambiante.

EXEMPLE 2

Préparation d'échantillons cylindriques de barrières thermiques selon l'invention.

Mesure de la diffusivité thermique.

L'alliage quasicristallin était celui de l'exemple 1.

Deux oxydes du commerce, fournis par la société Stark, ont été utilisés : une zircone à 20% en poids d'oxyde d'yttrium $Y_2O_3$ (échantillons Z0, Z2, Z5 et Z15) ; une alumine à 3% en poids d'oxyde de titane $TiO_2$ (échantillons TO, T2, T5 et T15). La distribution de la taille des grains était centrée sur 35 à 40 μm.

Les éprouvettes ont été préparées par projection en plasma chaud selon un procédé conventionnel. La poudre d'alliage et la poudre d'oxyde ont été injectées séparément dans le dard plasma par deux injecteurs situés de part et d'autre du plasma. Le mélange entre les deux constituants de la barrière s'effectuait à l'intérieur du plasma. Le débit de l'injecteur utilisé pour la poudre d'alliage quasicristallin a été fixé à différentes valeurs pour obtenir des valeurs de fraction volumique d'alliage dans les barrières thermiques respectivement voisines de 0%, 2%, 5% et 15%. L'injecteur utilisé pour la poudre d'oxyde avait un débit identique pour tous les échantillons.

Les dépôts ont été effectués en fixant les paramètres de la torche à plasma de manière conventionnelle, à savoir :

- débit de poudre d'oxyde        2,5 kg/h
- puissance de la torche        32 KW
- intensité    450 A
- distance torche/substrat     120 mm

Les éprouvettes cylindriques obtenues ont un diamètre de 10 mm et une épaisseur de 2 mm.

La diffusivité thermique des éprouvettes cylindriques a tout d'abord été mesurée à la température ambiante. Elle a été déterminée à l'aide d'un dispositif de laboratoire associant la méthode du flash laser à un détecteur semi-conducteur Hg-Cd-Te. Le laser a été utilisé pour fournir des impulsions de puissance entre 20 J et 30 J d'une durée de $5.10^{-4}$ s, pour chauffer la face frontale de l'éprouvette. Le thermomètre semi-conducteur servait à détecter la réponse thermique sur la face opposée de l'éprouvette. La diffusivité thermique a été déduite des expériences selon la méthode décrite par A. Degiovanni, High Temp. - High Pressure, 17 (1983) 683.

Les caractéristiques des éprouvettes cylindriques et les résultats des mesures sont rassemblés dans le tableau 1 ci-dessous. Il apparaît clairement que la conduction thermique du mélange zircone/alliage quasicristallin est très proche de celle de la zircone seule. De plus, la conduction thermique du mélange alumine/alliage quasicristallin est inférieure à celle de l'alumine seule.

TABLEAU 1

| N° | Type d'oxyde | Alliage quasicristallin % en vol. | Diffusivité thermique $\alpha$ (mm$^2$/s) $\pm$ 5% |
|---|---|---|---|
| Z0 | $ZrO_2$ + 20% $Y_2O_3$ | 0 | 0,50 |
| Z2 | $ZrO_2$ + 20% $Y_2O_3$ | 2 | 0,45 |
| Z5 | $ZrO_2$ + 20% $Y_2O_3$ | 5 | 0,46 |
| Z15 | $ZrO_2$ + 20% $Y_2O_3$ | 15 | 0,46 |
| T0 | $Al_2O_3$ + 3% $TiO_2$ | 0 | 1,90 |
| T2 | $Al_2O_3$ + 3% $TiO_2$ | 2 | 1,55 |
| T5 | $Al_2O_3$ + 3% $TiO_2$ | 5 | 1,50 |
| T15 | $Al_2O_3$ + 3% $TiO_2$ | 15 | 1,40 |

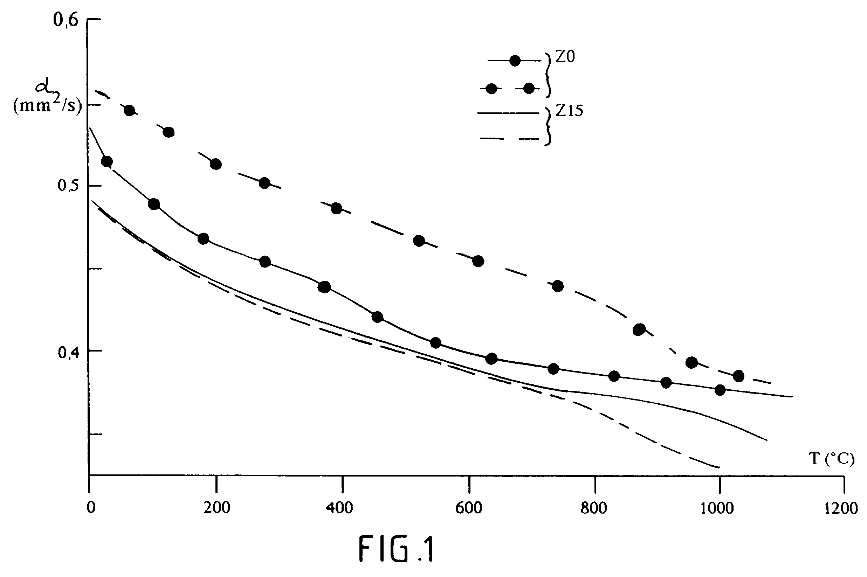

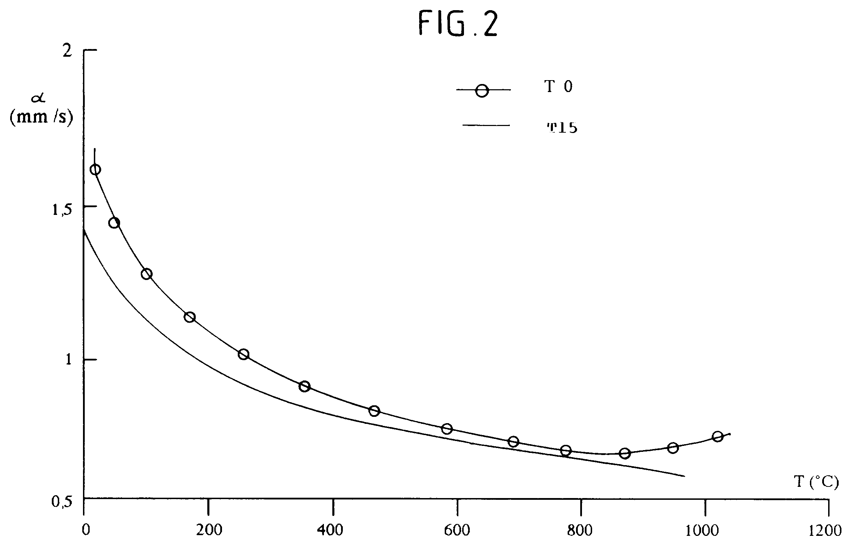

La diffusivité thermique a également été mesurée en munissant d'un four le dispositif expérimental ci-dessus. La vitesse de chauffage a été fixée à 5°C/min et les mesures ont été effectuées dans le domaine de température 20°C - 1150°C. Les résultats sont rassemblés sur les figures 1 et 2. La figure 1 représente la variation en fonction de la température, de la diffusivité thermique des éprouvettes Z0 (courbes portant des cercles noirs) et Z15 (courbes ne portant pas de cercles), lors du chauffage (courbes en trait plein) et du refroidissement (courbes en pointillés). La figure 2 représente la variation en fonction de la température, de la diffusivité thermique des éprouvettes T0 (courbe portant des cercles) et T15 (courbe sans cercles), lors du chauffage.

Il apparaît clairement que l'addition d'un alliage quasicristallin d'une part à la zircone, d'autre part à l'alumine, ne détériore pas les propriétés de barrière thermique des matériaux, mais qu'elle peut même les améliorer dans certains cas.

EXEMPLE 3

Préparation de barrières thermiques sur plaque d'acier.

Evaluation de la résistance aux chocs thermiques.

L'alliage quasicristallin utilisé pour la barrière thermique, et le cas échéant pour la couche d'accrochage, était celui de l'exemple 1.

Différents oxydes ont été utilisés. Dans tous les cas, la distribution de la taille des grains étaient centrée sur 35 à 40 µm. Les éprouvettes étaient constituées par une barrière thermique de 5 cm x 5 cm déposée sur une plaque d'acier de 2 mm d'épaisseur.

Le tableau 2 suivant rassemble les caractéristiques des éprouvettes.

Pour les éprouvettes dont le n° comporte l'indice a ou b, le dépôt de la barrière a été effectué selon le mode opératoire de l'exemple 2 sur une plaque d'acier, après une préparation conventionnelle de la surface par sablage au corindon et application d'une couche d'accrochage d'une épaisseur de 0,2 mm constituée par l'alliage de l'exemple 1.

Pour les éprouvettes dont le n° comporte l'indice c, le dépôt de la barrière a été effectué selon le mode opératoire de l'exemple 2, mais en projetant un mélange préalablement préparé de zircone chargée à 3% en poids d'oxyde de magnésium et d'alliage quasicristallin de l'exemple 1, après une préparation conventionnelle de la surface par sablage au corindon, mais sans application d'une couche d'accrochage.

TABLEAU 2

| N° | Type d'oxyde | Alliage quasicrist. % en vol. | Ep. de la barrière en mm | Sous-couche d'accroch. |
|---|---|---|---|---|
| Za0a | $ZrO_2$ + 20% $Y_2O_3$ | 0 | 0,4 | 0,2 mm |
| Za0b | $ZrO_2$ + 20% $Y_2O_3$ | 0 | 0,4 | 0,2 mm |
| ZA15a | $ZrO_2$ + 20% $Y_2O_3$ | 15 | 2 | 0,2 mm |
| ZA15b | $ZrO_2$ + 20% $Y_2O_3$ | 15 | 2 | 0,2 mm |

TABLEAU 2 (suite)

| N° | Type d'oxyde | Alliage quasicrist. % en vol. | Ep. de la barrière en mm | Sous-couche d'accroch. |
|---|---|---|---|---|
| ZA2a | $ZrO_2 + 20\%\ Y_2O_3$ | 2 | 0,4 | 0,2 mm |
| ZA5a | $ZrO_2 + 20\%\ Y_2O_3$ | 5 | 0,4 | 0,2 mm |
| ZA5c | $ZrO_2 + 3\%\ MgO$ | 5 | 0,4 | non |
| ZA15c | $ZrO_2 + 3\%\ MgO$ | 51 | 0,4 | non |

Les éprouvettes formées par les barrières déposées sur une plaque d'acier ainsi obtenues ont été soumises à des chocs thermiques. A cet effet, les plaques ont été fixées à 90° l'une de l'autre sur un support réfractaire circulaire de 80 cm de diamètre. Ce support a été mis en rotation avec une vitesse de 4 tr/min. Deux chalumeaux oxygène-propane ont été placés à 10 cm l'un de l'autre de sorte que, à chaque rotation du support, les éprouvettes étaient soumises à la flamme des chalumeaux.

La buse du premier chalumeau rencontrée était distante de 3 cm de la barrière et celle du second chalumeau était distante de 8 cm. Les débits de gaz étaient réglés pour que la température de surface des barrières approche 1350°C pendant le temps de séjour dans la flamme du premier chalumeau. Le diamètre de l'impact de la flamme du premier chalumeau a été estimé à 1,5 cm à partir de la dimension de l'aire portée à haute température.

Le second chalumeau couvrait entièrement la surface des éprouvettes. Après avoir quitté la zone de ce second chalumeau, les barrières refroidissaient par convection naturelle dans l'air pour atteindre une température de 250°C avant de rejoindre à nouveau le premier chalumeau.

Compte tenu des dimensions indiquées ci-dessus et de la vitesse de rotation, la vitesse de chauffage lors du choc thermique était proche de $10^4$°C/s pour une amplitude de 1100°C environ. De plus, il faut noter que cette température maximale excède la température de fusion de l'alliage quasicristallin utilisé.

Malgré ces conditions très sévères, les barrières ZA5a, ZA15a, ZA15b, ZA5c et ZA15c, c'est-à-dire toutes les barrières constituées par un matériau contenant au moins 5% d'alliage quasicristallin, ont résisté pendant 400 chocs jusqu'à l'arrêt de l'essai. La barrière ZA2a a résisté à 150 chocs environ. En revanche, les barrières ZA0a et ZA0b ont résisté respectivement à 5 chocs et à 20 chocs.

L'éprouvette ZA15a a été observée après polissage adéquat avec un microscope classique avant le traitement thermique et après 400 chocs. Les micrographies correspondantes (grossissement de 120) montrent que le matériau après 400 chocs thermiques reste tout à fait analogue au matériau initial, ce qui démontre sa bonne résistance aux chocs thermiques.

Des macrographies au grossissement 4 de l'état de surface des barrières ZA0b et ZA15b tel qu'il apparaissait après 20 chocs thermiques pour ZA0b et après 400 chocs thermiques pour ZA15b ont été réalisées. Sur ces macrographies, aucune détérioration de l'état de surface de l'échantillon ZA15b n'est visible, alors que de nombreuses fissures apparaissent sur l'échantillon ZA0b.

Ces résultats confirment que les barrières de la présente invention non seulement présentent une diffusivité thermique au moins aussi faible que celle des matériaux utilisés dans l'art antérieur comme barrières thermiques, mais qu'en outre, elles présentent une résistance aux chocs thermiques considérablement améliorée. L'amélioration de cette résistance aux chocs thermiques est constatée même en l'absence de couche d'accrochage. Celle-ci peut toutefois être utile pour apporter d'autres propriétés, telles que la résistance à la corrosion par exemple. L'amélioration de la résistance aux chocs thermiques est également constatée lors de l'utilisation de zircone pure ou de zircone comportant un très faible taux d'oxyde stabilisant. L'invention permet ainsi d'éviter les quantités d'oxyde d'yttrium de l'ordre de 20% nécessaires dans l'art antérieur lorsque la zircone est utilisée pour former des barrières thermiques.

**Revendications**

1. Barrière thermique, caractérisée en ce qu'elle est constituée par un matériau comprenant au moins un oxyde réfractaire ayant une faible diffusivité thermique et au moins un alliage d'aluminium quasicristallin contenant au moins 80% en volume d'au moins une phase quasicristalline, la proportion d'alliage quasicristallin dans le matériau représentant de 2 à 30% en volume.

2. Barrière selon la revendication 1, caractérisée en ce que l'oxyde réfractaire a une diffusitivité thermique inférieure à 5 $mm^2$/s.

3. Barrière thermique selon la revendication 1, caractérisée en ce que l'oxyde réfractaire est choisi parmi la zircone pure ou stabilisée et l'alumine stabilisée.

4. Barrière selon la revendication 1, caractérisée en que l'oxyde réfractaire est choisi parmi la zircone stabilisée par addition d'au plus 3% en poids de MgO, CaO ou $Y_2O_3$ et l'alumine stabilisée par addition de $TiO_2$.

5. Barrière thermique selon la revendication 1, caractérisée en ce que le matériau qui la constitue contient de 5 à 20% en volume d'alliage d'aluminium quasicristallin.

6. Barrière thermique selon la revendication 1, caractérisée en ce que l'alliage quasicristallin est choisi parmi ceux qui présentent l'une des compositions nominales suivantes, dans lesquelles les proportions sont données en nombres d'atomes :

   - $Al_aCu_bFe_cY_eI_g$, (I) dans laquelle Y représente au moins un élément choisi parmi V, Mo, Ti, Zr, Nb, Cr, Mn, Ru, Rh, Ni, Mg, W, Si et les terres rares, I représente les impuretés d'élaboration inévitables, $0{\leq}g{\leq}2$, $14{\leq}b{\leq}30$, $7{\leq}c{\leq}20$, $0{\leq}e{\leq}10$, $c+e{\geq}10$ et $a+b+c+e+g=100\%$ en nombre d'atomes ;
   - $Al_aCu_bFe_cX_dY_eI_g$, (II) dans laquelle X représente au moins un élément choisi parmi B, C, P, S, Ge et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0{\leq}g{\leq}2$, $14{\leq}b{\leq}30$, $7{\leq}c{\leq}20$, $0{\leq}d{\leq}5$, $21{\leq}b+c+e{\leq}45$, et $a+b+c+d+e+g=100\%$ en nombre d'atomes ;
   - $Al_aPd_bMn_cX_dY_eT_fI_g$ (III) dans laquelle X représente au moins un métalloïde choisi parmi B, C, Si, Ge, P, et S ; Y représente au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100\%$ atomique ; $15{\leq}b{\leq}25$ ; $6{\leq}c{\leq}16$ ; $21{\leq}b+c+e{\leq}45$ ; $0{\leq}f{\leq}4$ ; $0{\leq}g{\leq}2$ ; $0{\leq}d{\leq}5$ ;
   - $Al_aCu_bCo_cX_dY_eT_fI_g$ (IV) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables ; avec $a+b+c+d+e+f+g=100\%$ atomique ; $14{\leq}b{\leq}27$ ; $8{\leq}c{\leq}24$ ; $28{\leq}b+c+e{\leq}45$ ; $0{\leq}f{\leq}4$ ; $0{\leq}d{\leq}5$ ; $0{\leq}g{\leq}2$ ;
   - $Al_aX_dY_eI_g$, (V) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0{\leq}g{\leq}2$ ; $0{\leq}d{\leq}5$ ; $18{\leq}e{\leq}29$ et $a+d+e+g=100\%$ en nombre d'atomes ;
   - $Al_aCu_bCo_{b'}(B,C)_cM_dN_eI_f$ (VI) dans laquelle M représente au moins un élément choisi parmi Fe, Cr, Mn, Ni, Ru, Os, Mo, V, Mg, Zn et Pd, N représente au moins un élément choisi parmi W, Ti, Zr, Hf, Rh, Nb, Ta, Y, Si, Ge et les terres rares, et $a{\geq}50$, $0{\leq}b{\leq}14$, $0{\leq}b'{\leq}22$, $0{\leq}b+b'{\leq}30$, $0{\leq}c{\leq}5$, $8{\leq}d{\leq}30$, et $c+d{\geq}10$.

7. Procédé d'élaboration d'une barrière thermique selon l'une des revendications 1 à 6, caractérisé en ce qu'il consiste à effectuer un dépôt d'un mélange d'oxyde réfractaire et d'alliage quasicristallin en phase vapeur, ledit mélange en phase vapeur étant obtenu par pulvérisation cathodique.

8. Procédé selon la revendication 7, caractérisé en ce que la pulvérisation cathodique est effectuée à partir d'une cible unique obtenue à partir d'un matériau constitué par un mélange d'oxyde réfractaire ayant une faible diffusivité thermique et d'alliage d'aluminium quasicristallin, la proportion d'alliage quasicristallin représentant de 2 à 30% en volume.

9. Procédé d'élaboration d'une barrière thermique selon l'une des revendications 1 à 6, caractérisé en ce qu'il consiste à effectuer le dépôt sur le support à protéger à partir d'un mélange d'oxyde réfractaire et d'alliage d'aluminium quasicristallin à l'état fondu, ledit mélange à l'état fondu étant obtenu par fusion d'une poudre et projeté sur la surface du substrat à l'aide d'un dispositif adapté.

10. Procédé selon la revendication 9, caractérisé en ce que le dispositif est une torche à plasma.

11. Procédé d'élaboration d'une barrière thermique selon l'une des revendications 1 à 6, caractérisé en ce qu'il consiste à effectuer le dépôt sur un substrat à l'aide d'un chalumeau oxygène-gaz alimenté par un cordon souple contenant l'oxyde réfractaire et l'alliage quasicristallin, l'alliage quasicristallin représentant de 2 à 30% en volume.

12. Matériau destiné à l'élaboration de barrières thermiques, caractérisé en ce qu'il est constitué par un mélange de poudre d'au moins un oxyde réfractaire ayant une diffusivité inférieure à 5 $mm^2/s$, et de poudre d'au moins un alliage d'aluminium quasicristallin, dans lequel la proportion volumique d'alliage quasicristallin est d'environ 2 à environ 30% en volume, et les poudres ont une granulométrie qui permet une bonne coulabilité du mélange et une distribution des diamètres de grains comprise entre 10 et 45µm.

13. Matériau selon la revendication 12, caractérisé en ce que l'oxyde réfractaire est la zircone pure ou une zircone stabilisée à faible teneur en oxyde stabilisant, la teneur en oxyde stabilisant, choisi parmi CaO, MgO ou $Y_2O_3$, étant inférieure ou égale à 3% en poids.

14. Matériau destiné à l'élaboration de barrières thermiques, caractérisé en ce qu'il est sous forme d'un cordon souple constitué essentiellement par un mélange d'au moins un alliage d'aluminium quasicristallin sous forme de poudre et de zircone pure ou faiblement stabilisée sous forme de poudre finement divisée, l'alliage d'aluminium représentant au plus 30% en volume.

15. Application d'une barrière thermique selon la revendication 1 à la protection de pièces de moteurs d'avions, de pièces aéronautiques ou aérospatiales, de pièces de moteurs pour automobiles, de réacteurs chimiques, d'accessoires électroménagers.

## Patentansprüche

1. Wärmesperre, dadurch gekennzeichnet, daß sie aus einem Material besteht, das zumindest ein feuerfestes Oxid mit geringer Wärmeleitfähigkeit und zumindest eine quasikristalline Aluminiumlegierung umfaßt, die zumindest 80 Vol.-% zumindest einer quasikristallinen Phase enthält, wobei der Anteil der quasikristallinen Legierung im Material 2 bis 30 Vol.-% ausmacht.

2. Wärmesperre nach Anspruch 1, dadurch gekennzeichnet, daß das feuerfeste Oxid eine Wärmeleitfähigkeit von unter 5 $mm^2$/s aufweist.

3. Wärmesperre nach Anspruch 1, dadurch gekennzeichnet, daß das feuerfeste Oxid aus reinem oder stabilisiertem Zirkonoxid und stabilisiertem Aluminiumoxid ausgewählt ist.

4. Wärmesperre nach Anspruch 1, dadurch gekennzeichnet, daß das feuerfeste Oxid aus durch Zugabe von höchstens 3 Gew.-% MgO, CaO oder $Y_2O_3$ stabilisiertem Zirkonoxid und aus durch Zugabe von $TiO_2$ stabilisiertem Aluminiumoxid ausgewählt ist.

5. Wärmesperre nach Anspruch 1, dadurch gekennzeichnet, daß das diese aufbauende Material 5 bis 20 Vol.-% quasikristalline Aluminiumlegierung enthält.

6. Wärmesperre nach Anspruch 1, dadurch gekennzeichnet, daß die quasikristalline Legierung aus jenen ausgewählt ist, die eine der folgenden nominalen Zusammensetzungen aufweisen, worin die Anteile als Anzahl der Atome angegeben sind:

- $Al_aCu_bFe_cY_eI_g$ (1), worin Y zumindest ein aus V, Mo, Ti, Zr, Nb, Cr, Mn, Ru, Rh, Ni, Mg, W, Si und den seltenen Erden ausgewähltes Element darstellt, I die unvermeidlichen, herstellungsbedingten Verunreinigungen darstellt und für die Anzahl der Atome gilt: 0≤g≤2, 14≤b≤30, 7≤c≤20, 0≤e≤10, c+e≥10 und a+b+c+e+g=100%;

- $Al_aCu_bFe_cX_dY_eI_g$ (II), worin X zumindest ein aus B, C, P, S, Ge und Si ausgewähltes Element darstellt, Y zumindest ein aus V, Mo, Ti, Zr, Nb, Cr, Mn, Ru, Rh, Ni, Mg, W, Hf, Ta und den seltenen Erden ausgewähltes Element darstellt, I die unvermeidlichen, herstellungsbedingten Verunreinigungen darstellt und für die Anzahl der Atome gilt: 0≤g≤2, 14≤b≤30, 7≤c≤20, 0≤d≤5, 21≤b+c+e≤45 und a+b+c+d+e+g=100%;

- $Al_aPd_bMn_cX_dY_eT_fI_g$ (III), worin X zumindest ein aus B, C, Si, Ge, P und S ausgewähltes Metalloid darstellt; Y zumindest ein aus Fe, Mn, V, Ni, Cr, Zr, Hf, Mo, W, Nb, Ti, Rh, Ru, Re, Ta ausgewähltes Metall darstellt; T zumindest ein Seltenerdelement ist; I die unvermeidlichen, herstellungsbedingten Verunreinigungen darstellt und gilt: a+b+c+d+e+f+g=100 Atom-%; 15≤b≤25; 6≤c≤16; 21≤b+c+e≤45; 0≤f≤4; 0≤g≤2; 0≤d≤5;

- $Al_aCu_bCo_cX_dY_eT_fI_g$ (IV), worin X zumindest ein aus B, C, Si, Ge, P und S ausgewähltes Metalloid darstellt; Y zumindest ein aus Fe, Mn, V, Ni, Cr, Zr, Hf, Mo, W, Nb, Ti, Rh, Ru, Re ausgewähltes Metall darstellt; T zumindest ein Seltenerdelement ist; I die unvermeidlichen, herstellungsbedingten Verunreinigungen darstellt und gilt:

a+b+c+d+e+f+g=100 Atom-%; 14≤b≤27; 8≤c≤24; 28≤b+c+e≤45; 0≤f≤4; 0≤d≤5; 0≤g≤2;

- $Al_aX_dY_eI_g$ (V), worin X zumindest ein aus B, C, P, S, Ge und Si ausgewähltes Element darstellt; Y zumindest ein aus V, Mo, Cr, Mn, Fe, Co, Ni, Ru, Rh und Pd ausgewähltes Element darstellt, I die unvermeidlichen, herstellungsbedingten Verunreinigungen darstellt und für die Anzahl der Atome gilt: 0≤g≤2; 0≤d≤5; 18≤e≤29 und a+d+e+g=100%;

- $Al_aCu_bCo_b,(B,C)_cM_dN_eI_f$ (VI), worin M zumindest ein aus Fe, Cr, Mn, Ni, Ru, Os, Mo, V, Mg, Zn und Pd ausgewähltes Element darstellt, N zumindest ein aus W, Ti, Zr, Hf, Rh, Nb, Ta, Y, Si, Ge und den seltenen Erden ausgewähltes Element darstellt und gilt: a≥50, 0≤b≤14, 0≤b'≤22, 0≤b+b'≤30, 0≤c≤5, 8≤d≤30 und c+d≥10.

7. Verfahren zur Herstellung einer Wärmesperre nach einem der Ansprüche 1 bis 6, dadurch gekennzeichnet, daß eine Ablagerung eines Gemischs aus feuerfestem Oxid und quasikristalliner Legierung in der Dampfphase erzeugt wird, wobei das Gemisch in der Dampfphase durch Kathodenzerstäubung erzielt wird.

8. Verfahren nach Anspruch 7, dadurch gekennzeichnet, daß die Kathodenzerstäubung ausgehend von einem einzigen Target durchgeführt wird, die ausgehend von einem Material erhalten wird, das aus einem Gemisch aus feuerfestem Oxid mit einer geringen Wärmeleitfähigkeit und einer quasikristallinen Aluminiumlegierung besteht, wobei der Anteil an quasikristalliner Legierung 2 bis 30 Vol.-% ausmacht.

9. Verfahren zur Herstellung einer Wärmesperre nach einem der Ansprüche 1 bis 6, dadurch gekennzeichnet, daß auf dem zu schützenden Träger ausgehend von einem Gemisch aus feuerfestem Oxid und quasikristalliner Aluminiumlegierung im geschmolzenen Zustand eine Ablagerung erzeugt wird, wobei das Gemisch im geschmolzenen Zustand durch Schmelzen eines Pulvers erhalten und mit Hilfe einer dafür ausgebildeten Vorrichtung auf die Oberfläche des Substrats aufgespritzt wird.

10. Verfahren nach Anspruch 9, dadurch gekennzeichnet, daß die Vorrichtung ein Plasmabrenner ist.

11. Verfahren zur Herstellung einer Wärmesperre nach einem der Ansprüche 1 bis 6, dadurch gekennzeichnet, daß mit Hilfe eines Sauerstoff/gasbrenners, dem ein weiches Band zugeführt wird, das das feuerfeste Oxid und die quasikristalline Legierung enthält, wobei die quasikristalline Legierung 2 bis 30 Vol.-% ausmacht, auf einem Substrat eine Ablagerung erzeugt wird.

12. Zur Herstellung von Wärmesperren bestimmtes Material, dadurch gekennzeichnet, daß es aus einem Gemisch eines Pulvers zumindest eines feuerfesten Oxids mit einer Wärmeleitfähigkeit von unter 5 mm$^2$/s und eines Pulvers zumindest einer quasikristallinen Aluminiumlegierung besteht, worin der Volumsanteil an quasikristalliner Legierung etwa 2 bis etwa 30 Vol.-% ausmacht und die Pulver eine Korngröße, welche eine gute Gießbarkeit des Gemisches ermöglicht, und eine Verteilung der Korndurchmesser von zwischen 10 und 45 μm aufweisen.

13. Material nach Anspruch 12, dadurch gekennzeichnet, daß das feuerfeste Oxid reines Zirkonoxid oder stabilisiertes Zirkonoxid mit einem geringen Gehalt an stabilisierendem Oxid ist, wobei der Gehalt an stabilisierendem Oxid, das aus CaO, MgO oder $Y_2O_3$ ausgewählt ist, 3 Gew.-% oder weniger beträgt.

14. Zur Herstellung von Wärmesperren bestimmtes Material, dadurch gekennzeichnet, daß es in Form eines weichen Bandes vorliegt, das im wesentlichen aus einem Gemisch aus zumindest einer quasikristallinen Aluminiumlegierung in Pulverform und reinem oder geringfügig stabilisiertem Zirkonoxid in Form eines feinverteilten Pulvers besteht, wobei die Aluminiumlegierung höchstens 30 Vol.-% ausmacht.

15. Verwendung einer Wärmesperre nach Anspruch 1 zum Schutz von Flugzeugmotorteilen, Bauteilen in der Luftund Raumfahrt, Kraftfahrzeugmotorteilen, chemischen Reaktoren, Teilen von elektrischen Haushaltsgeräten bzw. Elektrotechnikzubehör.

## Claims

1. Thermal barrier characterized in that it consists of a material comprising at least one refractory oxide which has a low thermal diffusivity and at least one quasicrystalline aluminium alloy containing at least 80 % by volume of at least one quasicrystalline phase, the proportion of quasicrystalline alloy in the material representing from 2 to 30 % by volume.

2. Barrier according to Claim 1, characterized in that the refractory oxide has a thermal diffusivity lower than 5 mm$^2$/s.

3. Thermal barrier according to Claim 1, characterized in that the refractory oxide is chosen from pure or stabilized zirconia and stabilized alumina.

4. Thermal barrier according to Claim 1, characterized in that the refractory oxide is chosen from zirconia stabilized by addition of not more than 3 % by weight of MgO, CaO or Y$_2$O$_3$ and alumina stabilized by addition of TiO$_2$.

5. Thermal barrier according to Claim 1, characterized in that the material of which it consists contains from 5 to 20 % by volume of quasicrystalline aluminium alloy.

6. Thermal barrier according to Claim 1, characterized in that the quasicrystalline alloy is chosen from those which exhibit one of the following nominal compositions in which the proportions are given based on numbers of atoms:

   - Al$_a$Cu$_b$Fe$_c$Y$_e$I$_g$, (I) in which Y denotes at least one element chosen from V, Mo, Ti, Zr, Nb, Cr, Mn, Ru, Rh, Ni, Mg, W, Si and the rare earths, I denotes the unavoidable production impurities, $0 \leq g \leq 2$, $14 \leq b \leq 30$, $7 \leq c \leq 20$, $0 \leq e \leq 10$, $c+e \geq 10$ and $a+b+c+e+g=100$ % based on the number of atoms ;
   - Al$_a$Cu$_b$Fe$_c$X$_d$Y$_e$I$_g$, (II), in which X denotes at least one element chosen from B, C, P, S, Ge and Si, Y denotes at least one element chosen from V, Mo, Ti, Zr, Nb, Cr, Mn, Ru, Rh, Ni, Mg, W, Hf, Ta and the rare earths, I denotes the unavoidable production impurities, $0 \leq g \leq 2$, $14 \leq b \leq 30$, $7 \leq c \leq 20$, $0 \leq d \leq 5$, $21 \leq b+c+e \leq 45$, and $a+b+c+d+e+g=100$ % based on the number of atoms ;
   - Al$_a$Pd$_b$Mn$_c$X$_d$Y$_e$T$_f$I$_g$ (III) in which X denotes at least one metalloid chosen from B, C, Si, Ge, P and S ; Y denotes at least one metal chosen from Fe, Mn, V, Ni, Cr, Zr, Hf, Mo, W, Nb, Ti, Rh, Ru, Re, and Ta ; T is at least one rare earth; I denotes the unavoidable production impurities ; with $a+b+c+d+e+f+g = 100$ atom % ; $15 \leq b \leq 25$ ; $6 \leq c \leq 16$ ; $21 \leq b+c+e \leq 45$ ; $0 \leq f \leq 4$ ; $0 \leq g \leq 2$ ; $0 \leq d \leq 5$ ;
   - Al$_a$CU$_b$Co$_c$X$_d$Y$_e$T$_f$I$_g$ (IV) in which X denotes at least one metalloid chosen from B, C, Si, Ge, P and S ; Y denotes at least one metal chosen from Fe, Mn, V, Ni, Cr, Zr, Hf, Mo, W, Nb, Ti, Rh, Ru, Re ; T is at least one rare earth ; I denotes the unavoidable production impurities ; with $a+b+c+d+e+f+g=100$ atom % ; $14 \leq b \leq 27$ ; $8 \leq c \leq 24$ ; $28 \leq b+c+e \leq 45$ ; $0 \leq f \leq 4$ ; $0 \leq d \leq 5$ ; $0 \leq g \leq 2$ ;
   - Al$_a$X$_d$Y$_e$I$_g$, (V) in which X denotes at least one element chosen from B, C, P, S, Ge and Si, Y denotes at least one element chosen from V, Mo, Cr, Mn, Fe, Co, Ni, Ru, Rh and Pd, I denotes the unavoidable production impurities, $0 \leq g \leq 2$ ; $0 \leq d \leq 5$ ; $18 \leq e \leq 29$ and $a+d+e+g=100$ % based on the number of atoms ;
   - Al$_a$Cu$_b$Co$_{b'}$(B,C)$_c$M$_d$N$_e$I$_f$ (VI) in which M denotes at least one element chosen from Fe, Cr, Mn, Ni, Ru, Os, Mo, V, Mg, Zn and Pd, N denotes at least one element chosen from W, Ti, Zr, Hf, Rh, Nb, Ta, Y, Si, Ge and the rare earths, and $a \geq 50$, $0 \leq b \leq 14$, $0 \leq b' \leq 22$, $0 \leq b+b' \leq 30$, $0 \leq c \leq 5$, $8 \leq d \leq 30$ and $c+d \geq 10$.

7. Method for producing a thermal barrier according to one of Claims 1 to 6, characterized in that it consists in performing a deposition of a mixture of refractory oxide and of quasicrystalline alloy in vapour phase, the said mixing in vapour phase being obtained by cathode sputtering.

8. Method according to Claim 7, characterized in that the cathode sputtering is performed by starting with a single target obtained from a material consisting of a mixture of refractory oxide which has a low thermal diffusivity and of quasicrystalline aluminium alloy, the proportion of quasicrystalline alloy representing from 2 to 30 % by volume.

9. Method for producing a thermal barrier according to one of Claims 1 to 6, characterized in that it consists in performing the deposition on the support to be protected by starting with a mixture of refractory oxide and of quasicrystalline aluminium alloy in the molten state, the said mixture in the molten state being obtained by melting a powder and being projected onto the surface of the substrate with the aid of a suitable device.

10. Method according to Claim 9, characterized in that the device is a plasma torch.

11. Process for producing a thermal barrier according to one of Claims 1 to 6, characterized in that it consists in performing the deposition on a substrate with the aid of an oxygen-gas torch fed with a flexible cord containing the refractory oxide and the quasicrystalline alloy, the quasicrystalline alloy representing from to 2 to 30 % by volume.

12. Material intended for the production of thermal barriers, characterized in that it consists of a mixture of powder of at least one refractory oxide which has a thermal diffusivity lower than 5 mm$^2$/s, and of powder of at least one quasicrystalline aluminium alloy, in which the proportion by volume of quasicrystalline alloy is from approximately 2 to approximately 30 % by volume, and the powders have a particle size which allows the mixture to flow well and a particle diameter distribution of between 10 and 45 μm.

13. Material according to Claim 12, characterized in that the refractory oxide is pure zirconia or zirconia stabilized with a low content of stabilizing oxide, the content of stabilizing oxide, chosen from CaO, MgO and Y$_2$O$_3$, being lower than or equal to 3 % by weight.

14. Material intended for the production of thermal barriers, characterized in that it is in the form of a flexible cord consisting essentially of a mixture of at least one quasicrystalline aluminium alloy in the form of powder and of pure or weakly stabilized zirconia in the form of finely divided powder, the aluminium alloy representing not more than 30 % by volume.

15. Application of a thermal barrier according to Claim 1 to the protection of components of aircraft engines, of aeronautical or aerospace components, of components of motor vehicles engines, of chemical reactors and of electrical household appliances.

FIG.1

FIG.2